Europäisches Patentamt

European Patent Office

Office européen des brevets

(19)

(11) **EP 1 022 585 A2**

(12) **EUROPÄISCHE PATENTANMELDUNG**

(43) Veröffentlichungstag:
**26.07.2000 Patentblatt 2000/30**

(51) Int Cl.$^7$: **G01S 17/32**

(21) Anmeldenummer: **99124531.7**

(22) Anmeldetag: **09.12.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.01.1999 DE 19902455**

(71) Anmelder: **ROBERT BOSCH GMBH**
**70442 Stuttgart (DE)**

(72) Erfinder: **Hahlweg, Cornelius**
**31139 Hildesheim (DE)**

(54) **Abstandsmessverfahren und -vorrichtung**

(57) Es werden ein Verfahren und eine Vorrichtung zur Abstandsmessung mittels eines Strahls vorgeschlagen, bei dem die Meßvorrichtung einen intensitätsmodulierten Sendestrahl auf ein Ziel (4) lenkt und ein von dem Ziel (4) reflektierter Empfangsstrahl in der Meßvorrichtung mit dem Meßstrahl in Beziehung gesetzt und ausgewertet wird, wobei anhand der Auswertung die Frequenz der Intensitätsmodulation angepaßt wird, um wenigstens eine, vorzugsweise zwei angepaßte Frequenzen zu ermitteln, bei denen die modulierten Intensitäten von Sendestrahl und Empfangsstrahl in einem gegebenen Phasenverhältnis stehen und ein Abstand zum Ziel (4) anhand der Frequenz(en) berechnet wird.

Fig.1

**Beschreibung**

Die Erfindung betrifft ein Verfahren und eine Vorrichtung zur Abstandsmessung mittels eines Strahls gemäß den Oberbegriffen der unabhängigen Ansprüche.

Derartige Verfahren und Vorrichtungen sind beispielhaft in K.Stahl: Infrarottechnik, Hüthig Verlag, Heidelberg 1986, 2. Auflage, Seite 246 ff. beschrieben. Bei diesem bekannten Verfahren wird ein mit fester Frequenz modulierter Laserstrahl eingesetzt, und der Phasenunterschied zwischen einem gesendeten und einem empfangenen Signal wird durch einen phasenempfindlichen Gleichrichter in eine zum Phasenunterschied proportionale Spannung umgewandelt. Da bei diesem Verfahren Abstände, die sich um die während der Modulationsperiode vom Licht zurückgelegte Strecke unterscheiden, gleiche Meßspannungen liefern, ist es zur Gewinnung eindeutiger Meßergebnisse nötig, die Messung mit unterschiedlichen Festfrequenzen zu wiederholen, um aus der Vielzahl möglicher Meßergebnisse jeder einzelnen Messung dasjenige auszuwählen, das für alle Messungen paßt.

Bei diesem bekannten Verfahren wird die relative Phasenlage zweier periodischer Signale relativ zueinander gemessen, wofür es erforderlich ist, zu einem festgelegten Zeitpunkt, zum Beispiel einem Nulldurchgang des ersten Signals, den momentanen Wert des zweiten zu messen und mit dessen Amplitude in Beziehung zu setzen. Derartige Verfahren sind zwangsläufig empfindlich gegen Amplitudenschwankungen. Die Qualität der Messungen hängt daher kritisch von der Qualität der Intensitätsstabilisierung des zum Messen verwendeten Laserstrahls ab, was derartige Verfahren apparativ aufwendig und kostspielig macht.

Vorteile der Erfindung

Durch die Erfindung werden ein Verfahren beziehungsweise eine Vorrichtung zur Abstandsmessung mittels eines Strahls nach den Oberbegriffen der unabhängigen Ansprüche geschaffen, die gegen Intensitätsschwankungen des Sendestrahls erheblich unempfindlicher als die bekannten Verfahren sind und deshalb mit einfachen und preiswerten Mitteln durchgeführt werden können. Wesentlich für diesen Vorteil ist, daß Strahlen mit einem oszillierenden Parameter verwendet werden, dessen Oszillationsfrequenz abstimmbar ist, und daß, anstatt direkt eine Phasendifferenz zwischen den Oszillationen der betreffenden Parameter von Sende- und Empfangsstrahl zu messen, die Oszillationsfrequenz des Sendestrahls angepaßt wird, so daß die Parameter beider Strahlen beziehungsweise von ihnen abgeleitete Signale ein vorgegebenes Phasenverhältnis haben, das sich einfach und sicher nachweisen läßt, und daß als Ausgangsgröße zur Berechnung des Abstands anstelle der Phasendifferenz die in solcher Weise angepaßte Oszillationsfrequenz herangezogen wird.

Welches dieser oszillierende Parameter ist, ist nicht entscheidend. Bei Verwendung von Strahlen im MHz- bis GHz-Frequenzbereich kann dieser Parameter eine Feldstärke oder Amplitude sein; bei optischen Frequenzen ist zum Beispiel die Intensität geeignet.

Prinzipiell ist es möglich, einen Abstand anhand einer einzigen Frequenzmessung eindeutig zu berechnen, insbesondere wenn die dieser Frequenz entsprechende "Wellenlänge" der Oszillation der optischen Weglänge vom Meßgerät zum angepeilten Ziel und zurück entspricht. Genauere Messungen mit gleichzeitig geringeren Anforderungen an die Abstimmbarkeit eines das oszillierende Signal des Sendestrahls erzeugenden Oszillators sind allerdings möglich, wenn zwei verschiedene Oszillationsfrequenzen angepaßt werden, deren "Wellenlängen", das heißt die räumlichen Abstände zwischen aufeinanderfolgenden Minima (beziehungsweise Maxima) des modulierten Parameters, jeweils einem kleinen Bruchteil der Weglänge beziehungsweise des zu messenden Abstands entsprechen.

Dabei ergibt sich ein besonders einfacher Aufbau der Meßvorrichtung dann, wenn die zwei Phasenverhältnisse, die bei den zwei angepaßten Frequenzen zwischen Sendestrahl und Empfangsstrahl eingestellt werden, sich um $\pm\pi$ unterscheiden.

Eine einfache Möglichkeit, Sendestrahl und Empfangsstrahl in Beziehung zu setzen, um zu ermitteln, ob diese sich in einer gegebenen Phasenlage zueinander befinden, ist das Bilden des zeitabhängigen Produkts zweier Signale, die mit den Intensitäten dieser Strahlen in linearem Zusammenhang stehen. Diese zwei Signale sind vorzugsweise gleichanteilsfrei, so daß das Produkt immer dann im Mittel verschwindet, wenn die zwei Signale eine Phasendifferenz von $\pm\pi/2$ zueinander aufweisen.

Wenn das Produkt der zwei Signale positiv ist, wird vorzugsweise die Frequenz der Oszillationsmodulation in eine erste Richtung verändert, zum Beispiel heraufgesetzt, und sie wird in eine zweite Richtung verändert, zum Beispiel herabgesetzt, wenn das Produkt negativ ist. Dies bedeutet, daß das Verfahren nur gegen eine der zwei Phasendifferenzen, bei denen das Produkt im Mittel verschwindet, das heißt entweder gegen $+\pi/2$ oder gegen $-\pi/2$ konvergieren kann und die dieser Phasendifferenz entsprechende Oszillationsfrequenz stabil ist. Die der anderen Phasendifferenz entsprechende Oszillationsfrequenz ist instabil.

Wenn nach dem erfindungsgemäßen Verfahren zwei Frequenzen angepaßt werden, kann man für die Anpassung der zweiten Frequenz die Veränderungsrichtungen umkehren, so daß die zuvor stabile Phasendifferenz instabil wird, und umgekehrt.

Da es bei diesem Verfahren auf die absolute Phasendifferenz, das heißt die Laufzeitdifferenz, zwischen Sende- und Empfangsstrahl nicht ankommt, können die zwei Strahlen in Beziehung gesetzt werden durch Bilden des zeitabhängigen Produkts zweier Signale, die mit den oszillierenden Parametern dieser Strahlen in linearem Zusammenhang stehen. Phasenverschiebungen zwischen einem der zwei Strahlen und dem mit ihm in Zusammenhang stehenden Signal beeinflussen das Meßergebnis nicht, selbst wenn diese Phasenverschiebungen für Sendestrahl und Empfangsstrahl verschieden sind.

Die zwei mit den oszillierenden Parametern dieser Strahlen in Zusammenhang stehenden Signale sind vorzugsweise gleichanteilsfrei gemacht, zum Beispiel mit Hilfe eines Hochpaßfilters mit geeigneter Grenzfrequenz. Dies erlaubt es, durch einfache Produktbildung der zwei Signale und Auswerten des Vorzeichens des Produkts zu erkennen, ob die Oszillationsfrequenz des Sendestrahls an die zu messende Entfernung angepaßt ist oder nicht.

Wenn diese Frequenz nicht an den Abstand angepaßt ist, ist es gleichgültig, ob sie herauf- oder herabgesetzt wird, da beide Möglichkeiten zu einer angepaßten Frequenz führen können.

Wenn im Rahmen des Verfahrens zwei Frequenzen angepaßt werden, ist die vom Vorzeichen des Produkts abhängige Richtung der Frequenzänderung vorzugsweise für die erste und die zweite Frequenz unterschiedlich.

Weitere Merkmale und Vorteile der Erfindung ergeben sich aus der nachfolgenden Beschreibung eines Abstandsmeßverfahrens sowie von Meßvorrichtungen gemäß der Erfindung unter Bezugnahme auf die Figuren.

Figuren

Figur 1 zeigt ein schematisches Blockschaltbild einer Abstandsmeßvorrichtung gemäß der Erfindung; und

Figur 2 zeigt Signalverläufe an verschiedenen Stellen der Schaltung aus Figur 1 zur Erläuterung des erfindungsgemäßen Verfahrens; und

Figur 3 eine Variante der Abstandsmeßvorrichtung aus Figur 1.

Figur 4 eine Weiterentwicklung der Vorrichtung aus Figur 3; und

Figur 5 eine mit Funkstrahlen arbeitende Ausgestaltung der Vorrichtung.

Beschreibung von Ausführungsbeispielen

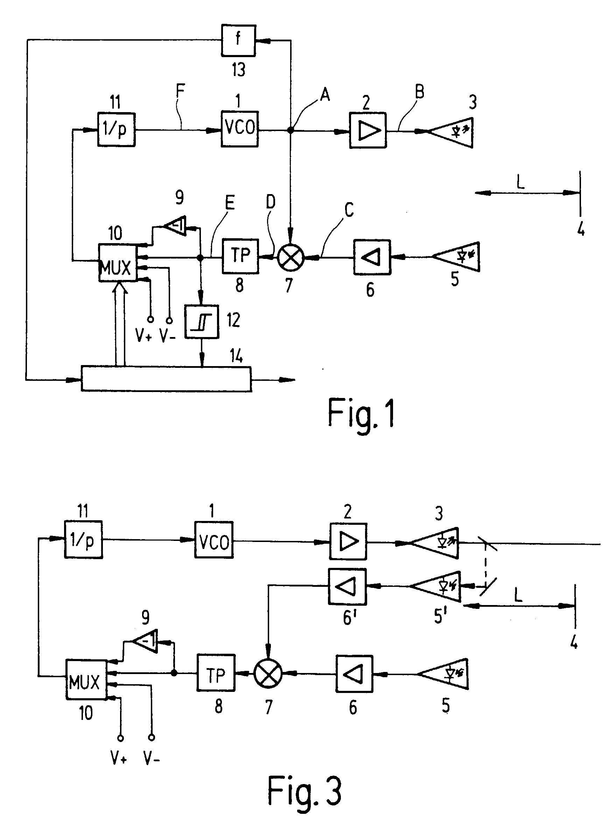

Die in Figur 1 schematisch dargestellte Abstandsmeßvorrichtung umfaßt eine Strahlungsquelle zum Erzeugen eines durch ein Modulationssignal A intensitätsmodulierten Sendestrahls. Die Strahlungsquelle ist im hier betrachteten Beispiel eine Laserdiode 3. Wenn wie hier der oszillierende Parameter die Intensität ist, kommt es nicht auf Kohärenz der verwendeten Strahlung an, so daß jede andere Lichtquelle verwendet werden kann, deren Intensität mit der benötigten Frequenz modulierbar ist.

Die Laserdiode 3 ist über einen Verstärker 2 mit dem Modulationssignal A beschaltet, das von einem spannungsgesteuerten Oszillator 1 erzeugt wird.

Das Modulationssignal A ist eine gleichanteilsfreie Schwingung, die im Verstärker 2 einer Versorgungsgleichspannung der Laserdiode 3 überlagert wird, so daß diese einen Versorgungsstrom mit gleichbleibendem Vorzeichen erhält und einen Sendestrahl mit einer Modulationsfrequenz erzeugt, die der Frequenz des vom Oszillator 1 ausgegebenen Modulationssignals A entspricht.

Die Laserdiode 3 richtet einen Sendestrahl auf ein Ziel 4, dessen Abstand L von der Meßvorrichtung gemessen werden soll. Von dem Ziel 4 zurückgeworfene Strahlung bildet einen Empfangsstrahl, der, gegebenenfalls mit Hilfe einer herkömmlichen, in der Figur nicht dargestellten Abbildungsoptik, auf eine Empfangseinrichtung, hier eine Photodiode 5, gelenkt wird.

Ein Signalausgang der Photodiode 5 ist mit einem Empfangsverstärker 6 verbunden. Der Empfangsverstärker 6 ist ein Wechselspannungsverstärker, der einen Gleichanteil im Ausgangssignal der Photodiode 5 unterdrückt und ein verstärktes Empfangssignal C erzeugt. Die untere Grenzfrequenz des Empfangsverstärkers 6 ist deutlich kleiner als die Modulationsfrequenz des Oszillators 1, so daß nicht nur der Gleichanteil im Ausgangssignal der Photodiode 5 vollständig abgefiltert wird, sondern außerdem die Zeitverzögerung, die der Empfangsverstärker 6 am Ausgangssignal der Photodiode 5 hervorruft, im Abstimmbereich des Oszillators 1 im wesentlichen konstant ist.

Das verstärke Empfangssignal C liegt an einem ersten Eingang eines Multiplizierers 7 an, dessen zweiter Eingang das Modulationssignal A vom Oszillator 1 empfängt. Der Multiplizierer 7 gibt ein Produktsignal D an einen Tiefpaß 8 aus, das konstant Null ist, wenn die Phasendifferenz zwischen dem Modulationssignal A und dem verstärkten Empfangssignal C exakt $\pm\pi/2$ ist. Weicht die Phasendifferenz von einem dieser zwei Werte ab, so ergibt sich ein oszillierendes Produktsignal D mit positivem oder negativem Gleichanteil und einem spektralen Anteil mit der zweifachen Modulationsfrequenz. Die Grenzfrequenz des Tiefpaßfilters 8 ist kleiner als das Zweifache der Modulationsfrequenz des Oszillators 1 gewählt, so daß das TiefpaßAusgangssignal E im wesentlichen dem Gleichanteil des Produktsignals D entspricht, das heißt einen gleitenden zeitlichen Mittelwert des Produktsignals D darstellt.

Der Ausgang des Tiefpasses 8 ist an einen von vier Eingängen eines Analogmultiplexers 10 direkt und an einen zweiten Eingang über einen Inverter 9 angeschlossen, der das Vorzeichen des TiefpaßAusgangssignals E umkehrt. Zwei weitere Eingänge des Multiplexers 10 sind jeweils mit einer festen positiven beziehungsweise negativen Spannung verbunden, auf deren Funktion später eingegangen wird.

Der Ausgang des Multiplexers 10 ist mit einem Integrator 11 verbunden; dessen Ausgangs wiederum ist mit einem Steuereingang des spannungsgesteuerten Oszillators 1 verbunden. Multiplizierer 7, Tiefpaß 8 und Integrator 11 bilden so eine Rückkoppelschleife, die die Frequenz des vom Oszillator 1 erzeugten Modulationssignals A regelt.

Ein Komparator 12 ist an den Ausgang des Tiefpasses 8 angeschlossen, der das Signal E überwacht und eine Benachrichtigung an einen Prozessor 14, zum Beispiel einen Mikroprozessor, ausgibt, wenn das Signal E Null wird. Der Prozessor 14 ist ferner mit einem Frequenzzähler 13 verbunden, von dem er die aktuelle Modulationsfrequenz des Oszillators 1 abfragen kann.

Die Arbeitsweise der Schaltung aus Figur 1 beruht auf der folgenden Überlegung. Die Laufzeit eines Strahls von der Strahlungsquelle 3 zum Ziel 4 und zurück zur Empfangseinrichtung 5 ist $\Delta t = 2L/c$, wobei L der Abstand zwischen Strahlungsquelle und Empfangseinrichtung einerseits und Ziel 4 andererseits und c die Geschwindigkeit der Strahlung in dem dazwischenliegenden Medium ist. Es ist immer möglich, eine erste Modulationsfrequenz $f_1$ so zu wählen, daß $\Delta t = (n \pm \frac{1}{4})/f_1$ erfüllt ist, wobei n eine ganze Zahl oder Null ist und die Zahl vollständiger "Wellenlängen" der Modulation auf der von Sendeund Empfangsstrahl zurückgelegten Strecke 2L bezeichnet. Unter diesen Bedingungen ist (unter Vernachlässigung von Signalverzögerungen in den Bauteilen der Meßvorrichtung wie etwa den Verstärkern 2,6) eine Phasenverschiebung von $\pm\pi/2$ zwischen dem Modulationssignal A und dem Empfangssignal C am Multiplizierer gegeben. Falls n gleich Null oder 1 ist, kann in Kenntnis der Frequenz $f_1$ der Abstand L direkt berechnet werden.

Im allgemeinen ist n deutlich größer als 1. In diesem Fall kann der Abstand L berechnet werden, wenn zwei Frequenzen $f_1, f_2$ an den Abstand L so angepaßt werden, daß sich eine Phasenverschiebung von $\pm\pi/2$ an den zwei mit Hilfe des Multiplizierers in Beziehung gesetzten Signalen A und C einstellt.

Dann gilt, wenn d die Signallaufzeit innerhalb der Meßvorrichtung ist:

$$d + \frac{2L}{c} = \frac{n+\frac{1}{4}}{f_1}, \quad d+\frac{2L}{c}=\frac{n-\frac{1}{4}}{f_2} \qquad (1)$$

für zwei eng benachbarte angepaßte Frequenzen $f_1, f_2$. Durch Auflösen dieser zwei Gleichungen nach $\Delta f = f_2 - f_1$ erhält man

$$L = \frac{c}{4\Delta f} - \frac{cd}{2} \qquad (2)$$

Es ist also zur Bestimmung des Abstands nicht erforderlich, die absolute Phasenverschiebung zwischen Sendestrahl und Empfangsstrahl einschließlich der Zahl n vollständiger Perioden zu kennen, die Kenntnis der Differenz $\Delta f$ zweier benachbarter angepaßter Frequenzen und der Signallaufzeit d reicht aus, sofern letztere nicht vernachlässigbar ist.

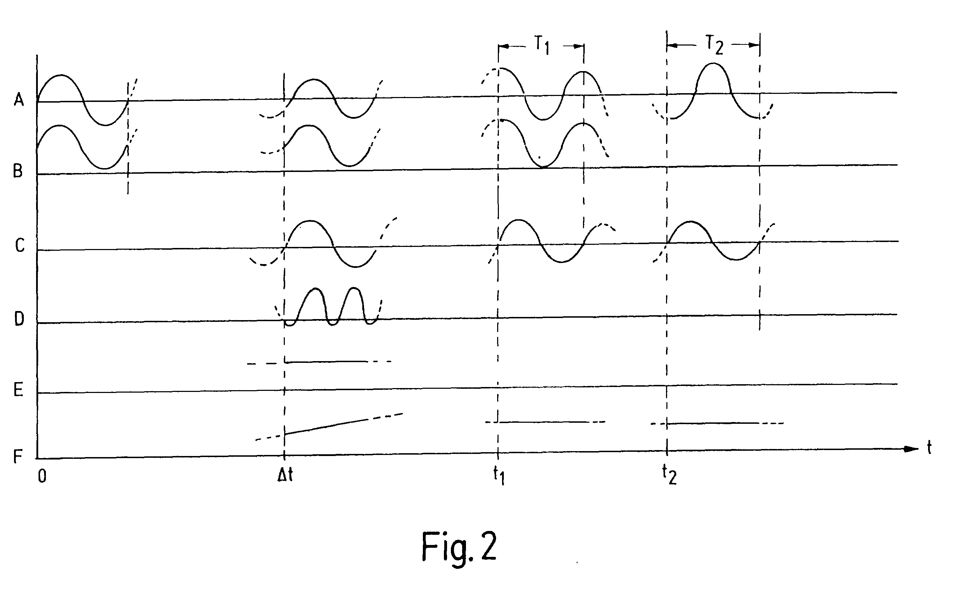

Figur 2 veranschaulicht den Ablauf des erfindungsgemäßen Verfahrens anhand des zeitlichen Verlaufs diverser Signale aus der Schaltung aus Figur 1. Zur Zeit t=0 erzeugt der Oszillator 1 ein Modulationssignal A, das in der ersten Zeile von Figur 2 dargestellt ist, mit einer willkürlich gewählten Frequenz $f_0=1/T_0$. Diese Frequenz kann zum Beispiel eingestellt werden, indem der Prozessor 14 den dritten oder vierten Eingang des Analogmultiplexers 10 an den Eingang des Integrators 11 für eine gegebene Zeitdauer durchschaltet, um ein Steuersignal F mit einem gegebenen Pegel am Steuereingang des spannungsgesteuerten Oszillators 1 zu erzeugen.

Das Ausgangssignal B des Verstärkers 2 folgt linear dem Modulationssignal A, wie in der zweiten Zeile von Figur 2 gezeigt. Eine mögliche Phasenverschiebung zwischen den Signalen A, B ist in der Figur vernachlässigt, da sie für das Verfahren ohne Bedeutung ist.

Nach einer Laufzeit $\Delta t$ trifft ein verstärktes Empfangssignal C (siehe dritte Zeile von Figur 2) am ersten Eingang des Multiplizierers 7 ein, das dem Modulationssignal A am Zeitpunkt t=0 entspricht. Die Signale A, C am Eingang des Multiplizierers 7 haben keine Phasenverschiebung von $\pm\pi/2$, es ergibt sich ein Produktsignal D mit überwiegend positivem Anteil. Infolgedessen ist auch das Ausgangssignal E des Tiefpaßfilters 8 positiv. Das vom Integrator 11 erzeugte Steuersignal F des Oszillators 1 steigt, und dementsprechend nimmt die Frequenz des Modulationssignals A allmählich zu. Diese Zunahme dauert so lange, bis an einem Zeitpunkt $t_1$ das Modulationssignal A eine Frequenz $f_1=1/T_1$ angenommen hat, bei der das Modulationssignal A einen Phasenvorsprung von $\pi/2$ gegenüber dem Empfangssignal C hat. Hier verschwinden Produktsignal D und Tiefpaßausgangssignal E, und das Steuersignal F ist konstant. Die Meßschaltung ist auf die Frequenz $f_1$ eingerastet.

Der Prozessor 14 stellt mit Hilfe des Komparators 12 das Einrasten fest und wartet eine vorgegebene Zeitspanne ab, bis er den Zählwert des Frequenzzählers 13 abfragt. Diese Zeitspanne kann selbstverständlich in Abhängigkeit von der benötigten Meßgenauigkeit vorgegeben werden.

Nachdem auf diese Weise eine erste angepaßte Frequenz $f_1$ gemessen worden ist, steuert der Prozessor 14 den Analogmultiplexer 10 an, so daß dieser, wenn er zuvor das Tiefpaßausgangssignal E direkt an den Integrator 11 durchgelassen hat, den Integrator nun mit dem Ausgang des Inverters 9 verbindet. Dies führt dazu, daß die aus Multiplizierer 7, Tiefpaß 8, Integrator 11 und Oszillator 1 aufgebaute Regelschleife instabil wird. Eine momentane Über- oder Unterschreitung der Frequenz $f_1$ des Modulationssignals A wird von der Schleife nicht mehr kompensiert, sondern verstärkt. Dies geht solange, bis sich ein neuer Gleichgewichtszustand mit einer zweiten angepaßten Frequenz $f_2$ ausgebildet hat, bei der das Vorzeichen der Phasenverschiebung zwischen Modulationssignal A und verstärktem Empfangssignal C umgekehrt ist. Dieser Zustand entspricht dem Zeitpunkt $t_2$ in Figur 2. Das Steuersignal F hat sich auf einen anderen Spannungswert eingestellt.

Nun kann erneut, wie oben bereits beschrieben, eine Messung der angepaßten Frequenz $f_2$ mit Hilfe des Frequenzzählers 13 und des Prozessors 14 erfolgen. Der Prozessor bildet die Differenz zwischen den zwei Frequenzen $f_1$ und $f_2$ und rechnet sie gemäß der Formel (2) in einen Abstand L um, der auf einem Display oder dergleichen angezeigt wird. Zu diesem Zweck ist wenigstens einmal, zum Beispiel an einem Prototyp der Vorrichtung oder nach der Fertigstellung jeder einzelnen Vorrichtung, eine Eichmessung mit den oben beschriebenen Schritten anhand einer bekannten Eichentfernung durchgeführt und mit Hilfe der erhaltenen Frequenzen und der Formel (2) unter Einsetzen der Eichentfernung als Abstand L die Verzögerung d berechnet worden, die bei jeder späteren Entfernungsmessung bei der Berechnung des Abstands L anhand der Formel (2) berücksichtigt wird.

Bei einer Variante der Vorrichtung beziehungsweise des Verfahrens ist es auch möglich, auf den Frequenzzähler 13 zu verzichten und stattdessen das Steuersignal F dem Prozessor 14 über einen Analog-Digital-Wandler direkt zur Auswertung zuzuführen. In einem solchen Fall verfügt der Prozessor 14 zweckmäßigerweise in einem Speicher über eine Darstellung der Spannungs-Frequenz-Kennlinie des spannungsgesteuerten Oszillators 1, die es ihm ermöglicht, die den gemessenen Spannungen des Steuersignals F entsprechenden Frequenzen zu ermitteln und daraus den gesuchten Abstand zu berechnen.

Bei einer weiteren Variante des Verfahrens beziehungsweise der Vorrichtung kann auf den Inverter 9 verzichtet werden. In diesem Fall schaltet der Prozessor 14 mit Hilfe des Multiplexers 10 nach Messung einer angepaßten Frequenz für eine vorgegebene Zeitspanne den dritten oder vierten Eingang des Analogmultiplexers 10 an den Integrator 11 durch, um so eine Verschiebung des Steuersignals F herbeizuführen, in deren Folge die Regelschleife auf eine benachbarte angepaßte Frequenz einrastet. Da bei dieser Variante die Phasenverschiebung aller angepaßten Frequenzen gleich ist, nämlich entweder immer $+\pi/2$ oder immer $-\pi/2$, ist die Differenz zwischen benachbarten Einrastfrequenzen $f_1$, $f_2$ doppelt so groß wie im oben mit Bezug auf Figur 2 beschriebenen Fall.

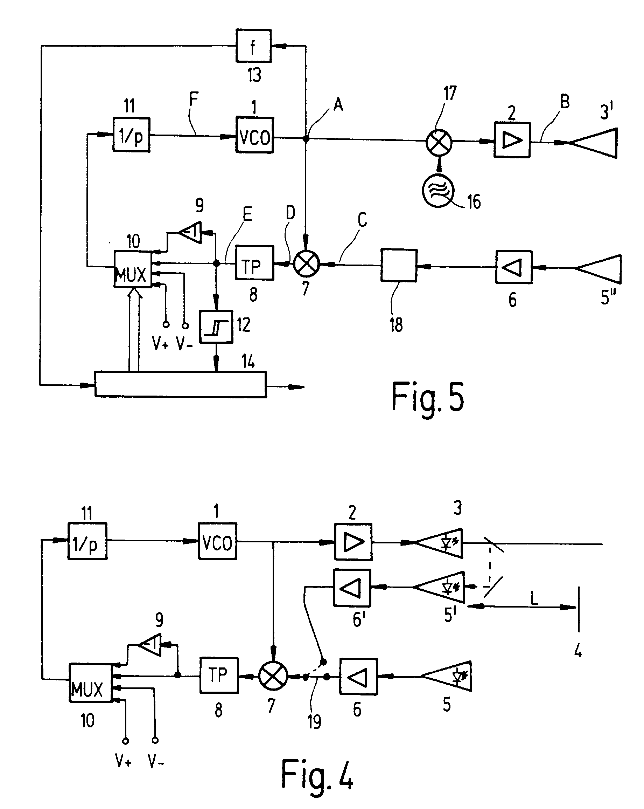

Figur 3 zeigt eine Variante der Schaltung aus Figur 2. Bei dieser Variante ist keine direkte Verbindung zwischen dem Ausgang des Oszillators 1 und dem Eingang des Multiplizierers 7 vorgesehen, stattdessen erhält der Multiplizierer 7 sein zweites Eingangssignal, das in der Funktion dem Modulationssignal A entspricht, von einer zweiten Photodiode 5', die über einen zweiten Empfangsverstärker 6' an den Multiplizierer 7 angeschlossen ist, und die direkt den von der Strahlungsquelle 3 abgegebenen Strahl beobachtet.

Der Aufbau der zwei Photodioden 5, 5' und der Empfangsverstärker 6,6' ist identisch.

Diese Variante ist zum Beispiel geeignet, wenn der Sender 2 eine frequenzabhängige Signalverzögerung aufweist. Da diese Verzögerung in beide Eingangssignale des Multiplizierers 7 in gleicher Weise eingeht, ist das erhaltene Meßergebnis von dieser Verzögerung abhängig.

Bei der in Figur 4 gezeigten Abwandlung sind zwei Empfänger und Empfängerverstärker 5,6 beziehungsweise 5',6' über einen Schalter 19 selektiv mit dem Multiplizierer 7 verbindbar. Dabei empfängt der zusätzliche Empfänger-Empfängerverstärker-Ast 5',6' den vom Sender 3 ausgesendeten Strahl auf einem festgelegten Weg mit einer bekannten optischen Weglänge, die insbesondere Null sein kann. Durch eine Bestimmung von angepaßten Frequenzen $f_1,f_2$ für diesen zusätzlichen Ast läßt sich die Signalverzögerung d der Vorrichtung jederzeit und unter beliebigen Einsatzbedingungen, zum Beispiel bei unterschiedlichen Arbeitstemperaturen der Verstärker etc., messen, so daß zu jedem Zeitpunkt ein exakter Wert dieser Signalverzögerung zur Verfügung steht, mit dessen Hilfe eine mit dem Empfänger 5 und dem Empfängerverstärker 6 aufgenommene Entfernungsmessung kalibriert werden kann.

Figur 5 zeigt eine Variante der erfindungsgemäßen Vorrichtung, die eine Entfernungsmessung mit Hilfe eines Sendestrahls ermöglicht, dessen Wellenlänge im Millimeter- beziehungsweise Zentimeterbereich liegt. Gleiche Bezugszeichen bezeichnen gleiche Elemente wie in den vorher beschriebenen Figuren. Ein Lokaloszillator 16 liefert eine Trägerschwingung im GHz-Bereich, die in einem Modulator 17 mit dem Modulationssignal A des spannungsgesteuerten Oszillators 1 amplitudenmoduliert wird. Das Ausgangssignal des Modulators 17, das eine spektrale Komponente mit der Trägerfrequenz enthalten kann oder auch trägerfrei sein kann, wird auf einen Verstärker 2 und anschließend auf eine Sendeantenne 3' gegeben, die einen amplitudenmodulierten Sendestrahl abstrahlt.

Der vom Ziel zurückgeworfene Empfangsstrahl wird von einer Empfangsantenne 5" in ein elektrisches Empfangssignal umgesetzt, das einen Empfangsverstärker 6' und einen zu dem Modulator 17 komplementären Demodulator 18 durchläuft, der ein ins Basisband verschobenes Empfangssignal C liefert. Dieses Empfangssignal C wird in der oben in Verbindung mit Figuren 1 und 2 beschriebenen Weise weiterverarbeitet.

Bei einer besonders einfach aufgebauten Variante der Vorrichtung aus Figur 5, die nicht in einer eigenen Figur dargestellt ist, sind der lokale Oszillator 16, Modulator 17 und Demodulator 18 fortgelassen. Die Frequenz des von der Sendeantenne 3' abgestrahlten Sendestrahls ist gleich der Arbeitsfrequenz des spannungsgesteuerten Oszillators 1. In diesem Fall ist nicht die Amplitude des Sendestrahls, sondern seine Feldstärke der oszillierende Parameter, dessen Oszillationsfrequenz mit Hilfe der Regelschleife aus Multiplizierer 7, Tiefpaß 8, Integrator 11, Frequenzzähler 13 und Multiplexer 10 angepaßt wird, um aus den erhaltenen angepaßten Frequenzwerten den Abstand des Ziels zu berechnen.

Weitere Varianten der Abstandsmeßvorrichtung betreffen die Anordnung des Inverters 9 und des Analogmultiplexers 10. Ohne die Funktionsweise der Vorrichtung zu verändern, können beide auch zwischen Multiplizierer 7 und Tiefpaß 8 angeordnet sein. Auch eine Anordnung zwischen dem spannungsgesteuerten Oszillator 1 und dem Multiplizierer 7 oder zwischen dem Empfangsverstärker 6 und dem Multiplizierer 7 sind möglich.

**Patentansprüche**

1. Verfahren zur Abstandsmessung, bei dem ein Sendestrahl von einem Meßgerät auf ein Ziel (4) gelenkt und ein von dem Ziel (4) reflektierter Empfangsstrahl im Meßgerät mit dem Sendestrahl in Beziehung gesetzt und ausgewertet wird, **dadurch gekennzeichnet**, daß anhand der Auswertung die Oszillationsfrequenz eines oszillierenden Parameters des Sendestrahls angepaßt wird, um ein erstes gegebenes Phasenverhältnis dieser oszillierenden Parameter des Sendestrahls und des Empfangsstrahls einzustellen, die durch die Anpassung erhaltene erste Frequenz gemessen wird und anhand der ersten Frequenz ein Abstand zum Ziel berechnet wird.

2. Verfahren nach Anspruch 1, **dadurch gekennzeichnet**, daß eine zweite Frequenz angepaßt und gemessen wird, bei der die oszillierenden Parameter von Sendestrahl und Empfangsstrahl ein zweites gegebenes Phasenverhältnis aufweisen, und daß bei der Berechnung des Abstands zum Ziel die Differenz der ersten und der zweiten Frequenz bestimmt wird.

3. Verfahren nach Anspruch 2, **dadurch gekennzeichnet**, daß die zwei Phasenverhältnisse sich um π unterscheiden.

4. Verfahren nach einem der vorhergehenden Ansprüche, **dadurch gekennzeichnet**, daß die oszillierenden Parameter modulierte Intensitäten des Sendestrahls und des Empfangsstrahls sind.

5. Verfahren nach einem Anspruch 4, **dadurch gekennzeichnet**, daß der Sendestrahl und der Empfangsstrahl in Beziehung gesetzt werden durch Bilden des zeitabhängigen Produkts zweier Signale (A,C), die mit den Intensitäten dieser Strahlen in linearem Zusammenhang stehen.

6. Verfahren nach Anspruch 5, **dadurch gekennzeichnet**, daß die zwei Signale (A,C) gleichanteilsfrei sind, und daß bei der Anpassung der ersten Frequenz die Frequenz der Intensitätsmodulation in eine erste Richtung verändert wird, wenn das Produkt positiv ist und in eine zweite Richtung verändert wird, wenn das Produkt negativ ist.

7. Verfahren nach Anspruch 6, **dadurch gekennzeichnet**, daß bei der Anpassung der zweiten Frequenz die Frequenz der Intensitätsmodulation in die zweite Richtung verändert wird, wenn das Produkt positiv ist und in die erste Richtung verändert wird, wenn das Produkt negativ ist.

8. Verfahren nach einem der Ansprüche 5 bis 7, **dadurch gekennzeichnet**, daß eines (C) der zwei Signale durch Unterdrücken des Gleichanteils eines Intensitätssignals des Empfangsstrahls erhalten wird.

9. Verfahren nach einem der Ansprüche 5 bis 8, **dadurch gekennzeichnet**, daß eines (A) der zwei Signale zur Intensitätsmodulation des Sendestrahls verwendet wird.

10. Verfahren nach einem der Ansprüche 1 bis 3, **dadurch gekennzeichnet**, daß die oszillierenden Größen momentane Feldstärken des Sendestrahls beziehungsweise des Empfangsstrahls sind.

11. Verfahren nach Anspruch 10, **dadurch gekennzeichnet**, daß der Sendestrahl und der Empfangsstrahl in Beziehung gesetzt werden durch Bilden des zeitabhängigen Produkts zweier Signale (A,C), die an den Sendestrahl beziehungsweise den Empfangsstrahl durch eine Amplitudenmodulationsoperation gekoppelt sind.

12. Verfahren nach Anspruch 11, **dadurch gekennzeichnet**, daß bei der Anpassung der ersten Frequenz die Frequenz der Amplitudenmodulation in eine erste Richtung verändert wird, wenn das Produkt positiv ist und in eine zweite Richtung verändert wird, wenn das Produkt negativ ist.

13. Verfahren nach Anspruch 12, **dadurch gekennzeichnet**, daß bei der Anpassung der zweiten Frequenz die Frequenz der Amplitudenmodulation in die zweite Richtung verändert wird, wenn das Produkt positiv ist und in die erste Richtung verändert wird, wenn das Produkt negativ ist.

14. Abstandsmeßvorrichtung mit einem Oszillator (1) zum Erzeugen eines oszillierenden Signals (A), einer Strahlungsquelle (3) zum Erzeugen eines Sendestrahls mit einem entsprechend dem oszillierenden Signal (A) oszillierenden Parameter, einer Empfangseinrichtung (5) für einen Empfangsstrahl und einer Meßschaltung (7,8,...,14) zum Ermitteln eines Abstands (L) zwischen einem Punkt der Abstandsmeßvorrichtung und einem Ziel (4) anhand einer Phasendifferenz der oszillierenden Parameter von Sende- und Empfangsstrahl, **dadurch gekennzeichnet**, daß der Oszillator (1) mit Hilfe eines Steuersignals F durchstimmbar ist, wobei die Meßschaltung (7,8,...14) Mittel (8,9,10,11) zum Variieren des Steuersignals (F) umfaßt, die das Steuersignal (F) variieren, wenn die Phasendifferenz von Sende- und Empfangsstrahl von einem gegebenen Verhältnis abweicht.

15. Abstandsmeßvorrichtung nach Anspruch 14, **dadurch gekennzeichnet**, daß das oszillierende Signal (A) und ein von der Empfangseinrichtung (5,6) ausgegebenes Empfangssignal (C) gleichanteilsfrei sind und daß die Meßschaltung (7,8,....,14) einen Multiplizierer (7) zum Multiplizieren des oszillierenden Signals (A) mit dem Empfangssignal (C) umfaßt.

16. Abstandsmeßvorrichtung nach Anspruch 15, **dadurch gekennzeichnet**, daß die Meßschaltung (7,8,....,14) einen Inverter (7) zum Vertauschen des Vorzeichens eines Eingangssignals oder des Ausgangssignals des Multiplizierers (D) umfaßt.

17. Abstandsmeßvorrichtung nach einem der Ansprüche 14 bis 16, **dadurch gekennzeichnet**, daß die Meßschaltung (7,8,...,14) ein Tiefpaßfilter (8) für das Ausgangssignal (D) des Multiplizierers (7) umfaßt, dessen Grenzfrequenz kleiner als das Zweifache der Frequenz der Modulation ist.

18. Abstandsmeßvorrichtung nach Anspruch 17, **dadurch gekennzeichnet**, daß die Meßschaltung (7,8,....,14) einen Integrator (11) für das Ausgangssignal des Tiefpaßfilters (8) umfaßt, der das Steuersignal (F) für den Oszillator (1) erzeugt.

19. Abstandsmeßvorrichtung nach einem der Ansprüche 14 bis 18, **dadurch gekennzeichnet**, daß der Oszillator (1) spannungsgesteuert ist.

20. Abstandsmeßvorrichtung nach einem der Ansprüche 14 bis 19, **dadurch gekennzeichnet**, daß die Meßschaltung einen Frequenzzähler (13) zum Messen der Modulationsfrequenz umfaßt.

21. Abstandsmeßvorrichtung nach einem der Ansprüche 14 bis 20, **dadurch gekennzeichnet**, daß der oszillierende Parameter des Sendestrahls beziehungsweise des Empfangsstrahls dessen Intensität ist.

22. Abstandsmeßvorrichtung nach Anspruch 21, **dadurch gekennzeichnet**, daß die Empfangseinrichtung (5,6) ein Hochpaßfilter (6) umfaßt.

23. Abstandsmeßvorrichtung nach einem der Ansprüche 14 bis 21, **dadurch gekennzeichnet**, daß der oszillierende Parameter des Sendestrahls beziehungsweise des Empfangsstrahls dessen Feldstärke ist.

24. Abstandsmeßvorrichtung nach einem der Ansprüche 14 bis 21, **dadurch gekennzeichnet**, daß der oszillierende Parameter des Sendestrahls beziehungsweise des Empfangsstrahls dessen Amplitude ist.

25. Abstandsmeßvorrichtung nach Anspruch 24, **dadurch gekennzeichnet**, daß sie einen lokalen Oszillator (16) und einen Modulator (17) zum Amplitudenmodulieren der Schwingung des lokalen Oszillators (16) mit dem oszillierenden Signal (A) umfaßt, und daß die Empfangseinrichtung eine Antenne (5'') und einen Demodulator (18) zum Amplitudendemodulieren des von der Antenne (5'') gelieferten Signals umfaßt.

26. Abstandsmeßvorrichtung nach einem der Ansprüche 14 bis 25, **dadurch gekennzeichnet**, daß sie eine zweite Empfangseinrichtung (5',6') umfaßt, die den Sendestrahl direkt empfängt.

Fig.1

Fig.3

Fig.2

Fig. 5

Fig. 4